# EUROPEAN PATENT SPECIFICATION

(11) **EP 2 565 432 B1**
(45) Date of publication and mention of the grant of the patent: **03.07.2024**
(21) Application number: 12171599.9
(22) Date of filing: 12.06.2012
(51) Int. Cl.: F02D 41/40, F02D 19/06, F02D 41/00, F02D 41/04, F02B 3/06, F02B 25/04, F02B 75/02, F02D 41/38

(54) **FUEL INJECTION TIMING CONTROL FOR A LARGE RECIPROCATING PISTON COMBUSTION ENGINE**
KRAFTSTOFFEINSPRITZZEITPUNKT-STEUERUNG FÜR EINE GROSSE HUBKOLBENBRENNKRAFTMASCHINE
CONTRÔLE DU TEMPS D'INJECTION POUR UN GRAND MOTEUR À COMBUSTION À PISTON ALTERNATIF

(30) Priority: 14.07.2011 EP 11173956
(43) Date of publication of application: 06.03.2013
(73) Proprietor: Wärtsilä Schweiz AG, 8401 Winterthur (CH)
(72) Inventor: Sudwoj, Gregory, 8482 Sennhof/Winterthur (CH)
(74) Representative: IPS Irsch AG

(56) References cited:
- EP-A2- 1 445 456
- DE-A1- 19 646 942
- DE-C1- 19 937 139
- US-A1- 2004 069 281
- US-A1- 2005 145 222
- US-A1- 2012 080 009
- US-B1- 6 325 044

## Description

The invention relates to a method and a system for controlling the operation of a large reciprocating piston combustion engine of the diesel type according to the preamble of claim 1 and claim 9, respectively, to a retrofit set for controlling the operation of a large reciprocating piston combustion engine of the diesel type according to claim 10 and to a large reciprocating piston combustion engine of the diesel type according to claim 11.

In large reciprocating piston combustion engines of the diesel type and particularly in two-stroke large reciprocating piston combustion engines of the diesel type nozzles are used for injecting fuel into a combustion space which is arranged in each cylinder of the engine. As a rule, the injection timing is optimized to yield maximum efficiency at full load. At partial load the efficiency of the engine usually decreases. In modern large reciprocating piston combustion engines of the diesel type so-called variable injection timing is therefore applied in a partial load range in order to compensate the decrease in efficiency occurring at partial load. In the partial load range in which variable injection timing is applied the value of the injection begin angle is automatically advanced depending on engine load and optionally on the scavenge air pressure.

In addition, an adjustable Fuel Quality Setting can be provided for compensating poor fuel ignition properties by advancing the value of the injection begin angle.

In document EP 0 781 907 A1 a method and an apparatus for operating a self-igniting reciprocating piston combustion engine in a partial load range are described in which at least one state variable or at least two state variables of the reciprocating piston combustion engine are measured with a sensor each and both the start of fuel injection as well as the start of the opening and/or closing of an inlet or exhaust valve are regulated in response to the measured state variables in such a manner that the maximum compression pressure in the combustion chamber as a function of the load in an upper partial load range remains constant or nearly constant. The state variable or state variables can be any of the following variables: turbocharger boost pressure, maximum pressure in the cylinder, pressure at a given crankshaft angle in the cylinder, engine power, rotational speed of the engine, rotational speed of the turbocharger, temperature after the compressor, temperature after the boost air cooler, amount of combustion air, exhaust gas temperature before the turbocharger, exhaust gas temperature after the turbocharger or the amount of fuel.

Further large reciprocating piston combustion engines are disclosed in documents DE19937139C1 and US2005145222.

In large reciprocating piston combustion engines of the diesel type operated on low engine load for a prolonged period of time piston rings could adopt their shape to the specific conditions, i.e. to low combustion pressure and low gas forces. If after such a period of time the engine load is increased, e.g. by accelerating the engine speed, the piston rings might not immediately be able to seal properly, and it might not be possible to maintain an oil film between the piston rings and the cylinder liner. The risk of scuffing between piston rings and cylinder liner is therefore increased during acceleration of engine speed.

It is an object of the present invention to provide a method, a system and a retrofit set for controlling the operation of a large reciprocating piston combustion engine of the diesel type and to provide a large reciprocating piston combustion engine of the diesel type including such a system or such a retrofit set which assist in reducing scuffing and in increasing service life of piston rings and cylinder liners.

This object is satisfied in accordance with the invention by the method, and the system defined in claims 1, and 9 respectively, by the retrofit set defined in claim 10 and by the large reciprocating piston combustion engine of the diesel type defined in claim 11.

The method according to the invention for controlling the operation of a large reciprocating piston combustion engine of the diesel type includes injecting fuel into a combustion chamber of the reciprocating piston combustion engine and applying so-called variable injection timing in a partial load range by advancing the value of the injection begin angle depending on engine load or engine speed. The method additionally includes detecting an increase in engine load or engine speed, comparing the detected increase with a predetermined value and shifting the injection begin caused by the variable timing to zero if the detected increase exceeds the predetermined value, and advancing the value of the injection begin angle to the value given by variable injection timing under steady state conditions after stabilization of the engine load or engine speed, wherein the stabilization of the engine load or engine speed, is defined as being established after a predefined stabilization time between 30 and 60 minutes or longer.

The value of the injection begin angle is advantageously advanced with a predetermined ramp up time to the value given by variable injection timing under steady state conditions after stabilization of the engine load or engine speed.

Upon detection of an increase in engine load or engine speed, the advance in the injection begin angle caused by variable injection timing is advantageously shifted to zero with a predetermined ramp down time if the detected increase exceeds the predetermined value.

The partial load range in which variable injection timing is applied typically extends from about 60 % to 95 % of full engine load or full engine speed.

In an advantageous embodiment the increase in engine load or engine speed is detected in a time interval, in particular a time interval of 10 minutes maximum or 20 minutes maximum or 30 minutes maximum, and wherein the advance in the injection begin angle caused by variable injection timing is kept unchanged or shifted to zero if the detected increase exceeds the predetermined value in this time interval.

The predetermined value with which the detected increase is compared can e.g. be at least 1.5 % or 2 % of the full engine load or engine speed and can optionally depend on the engine load and/or on the size of the engine.

In a further advantageous embodiment of the method an operator adjustable Fuel Quality Setting is provided for compensating poor fuel ignition properties by advancing or retarding the value of the injection begin angle, and the advance or retard in the injection begin angle caused by Fuel Quality Setting is either kept unchanged or shifted to zero if the detected increase exceeds the predetermined value.

In an advantageous embodiment variant, after stabilization of the engine load or engine speed, in particular after a predefined stabilization time between 30 and 60 minutes or longer, the advance or retard in the injection begin angle caused by Fuel Quality Setting is shifted to the value it had before the detected increase exceeded the predetermined value.

The system according to the invention for controlling the operation of a large reciprocating piston combustion engine of the diesel type includes an injection nozzle for injecting fuel into a combustion chamber of the reciprocating piston combustion engine and a control unit for applying so-called variable injection timing in a partial load range by advancing the value of the injection begin angle depending on engine load or engine speed. The system additionally includes a detector for detecting an increase in engine load or engine speed or in the engine load or engine speed setting, wherein the system is capable and/or configured to compare the detected increase with a predetermined value and to keep the advance in the injection begin angle caused by variable injection timing unchanged or to shift it to zero if the detected increase exceeds the predetermined value, and wherein the system is capable and/or configured to advance the value of the injection begin angle to the value given by variable injection timing under steady state conditions after stabilization of the engine load or engine speed, in particular after a predefined stabilization time between 30 and 60 minutes or longer.

In a further advantageous embodiment the system contains a software according to the description given above, wherein the software is loaded into the control unit and/or system memory for system operation.

The invention further includes a retrofit set which contains a control unit for implementing a system according to one or several of the embodiments or embodiment variants described above for controlling the operation of a large reciprocating piston combustion engine of the diesel type. In an advantageous embodiment variant the retrofit set is implemented as a modification of a remote control set for controlling the operation of a large reciprocating piston combustion engine of the diesel type.

The large reciprocating piston combustion engine of the diesel type according to the invention includes at least one combustion chamber and a system according one or several of the embodiments or embodiment variants described above or a retrofit set according to one or several of the embodiments or embodiment variants described above for controlling the operation of the reciprocating piston combustion engine.

The method, system and retrofit set according to the invention are suitable for the operation of stationary and mobile two-stroke and four-stroke large reciprocating piston combustion engines of the diesel type, in particular for four-stroke diesel engines with a cylinder bore of greater than 160 mm or greater than 200 mm or for two-stroke diesel engines with a cylinder bore of greater than 270 mm or greater than 300 mm diameter.

The method, system and retrofit set according to the invention and the large reciprocating piston combustion engine of the diesel type according to the invention have the advantage that they reduce the combustion pressure p_{comb} and the gradient dp_{comb}/dα , which describes how fast the combustion pressure rises, due to advanced injection begin. This minimizes the combustion pressure impact on the piston rings. The piston rings will have better chances to be properly pressed against the liner wall and to properly seal. Elimination of the variable injection timing effect and optionally of the Fuel Quality Setting effect during engine load up increases the safety margin of piston running also due to the fact that with retarded injection begin angle the energy of the exhaust gases is higher and turbocharger speed, scavenge air pressure and mass flow is consequently increased. Thus, an increase in the maximum temperature of "hot parts" caused by an increased amount of fuel injected for engine load up is avoided or limited by the increased scavenge air flow. Moreover, emissions are reduced during engine load up due to better scavenging of the cylinders.

The above description of the embodiments and variants serves merely as an example. Further advantageous embodiments can be seen from the dependent claims and the drawing. Moreover, in the context of the present invention, individual features from the described or illustrated embodiments and from the described or illustrated variants can be combined with one another in order to form new embodiments.

In the following the invention will be explained in more detail with reference to the specific embodiment and with reference to the drawing.
- Fig. 1: is an embodiment of a large reciprocating piston combustion engine of the diesel type according to the present invention;
- Fig. 2: is a schematic view of an embodiment of a system for controlling the operation of a large reciprocating piston combustion engine of the diesel type according to the present invention;
- Fig. 3: is an exemplary diagram of the advance of the injection begin angle as a function of the engine load for a large reciprocating piston combustion engine of the diesel type according to the present invention;
- Fig. 4A,B: are exemplary diagrams of the pressure in the cylinder of a large reciprocating piston combustion engine of the diesel type according to the present invention as a function of the crankshaft angle, without and with variable injection timing respectively;
- Fig. 5A: is an exemplary diagram of the variation of the engine load for a large reciprocating piston combustion engine of the diesel type according to the present invention as a function of time; and
- Fig. 5B: is an exemplary diagram of the so-called "dead band" width of the engine load for a large reciprocating piston combustion engine of the diesel type according to the present invention as a function of the engine load.

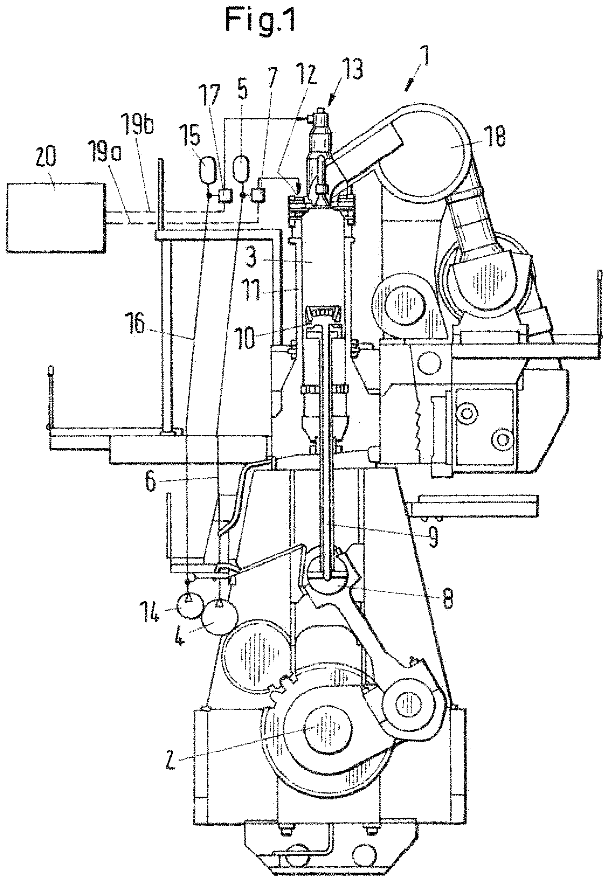

Fig. 1 shows an embodiment of a large reciprocating piston combustion engine of the diesel type 1 and particularly a two-stroke large reciprocating piston combustion engine of the diesel type according to the present invention. The engine 1 typically contains a crankshaft 2 which is rotatably journalled in a crankshaft housing, a plurality of cylinders and a piston 10 each, which is movably arranged in a cylinder liner 11. The piston 10 is usually connected to a respective crosshead 8 via a piston rod 9 and the crosshead 8 is connected to the crankshaft 2 via a connecting rod to drive the crankshaft. The cylinder liner 11 is upwardly closed by a cylinder cover so that a combustion space 3 is respectively formed in the cylinder between the piston and the cylinder cover.

In the embodiment shown in Fig. 1 the cooperation between the crankshaft 2 and the fuel supply is advantageously controlled electronically by a control unit 20. The fuel can e.g. be supplied to an injection nozzle 12 with a high pressure pump 4 via a tube line 6 and via an injection device 7. In an advantageous embodiment variant the cooperation between the crankshaft 2 and outlet valve 13 is also controlled electronically by the control unit 20. A hydraulic system comprising a pressure pump 14, a tube line 16 and a control valve 17 allows to open and to close the outlet valve 13. The control unit 20 is advantageously connected to either or both of the injection device 7 and the control valve 17 via control lines 19a, 19b respectively. Moreover, either or both of the tube line or tube lines 6, 16 can be connected to an optional accumulator 5, 15 respectively.

The large reciprocating piston combustion engine of the diesel type can optionally include a turbocharger 18 through which the exhaust gas coming from the outlet valve 13 is passed in order to increase the efficiency of the large reciprocating piston combustion engine of the diesel type.

In an advantageous embodiment variant the large reciprocating piston combustion engine 1 is implemented as a longitudinally scavenged two-stroke diesel engine which has a centrally arranged outlet valve 13 and a plurality of injection nozzles 12 which are arranged peripherally at the cylinder cover. Usually a two-stroke diesel engine 1 of this kind has two to four injection nozzles 12 for fuel injection.

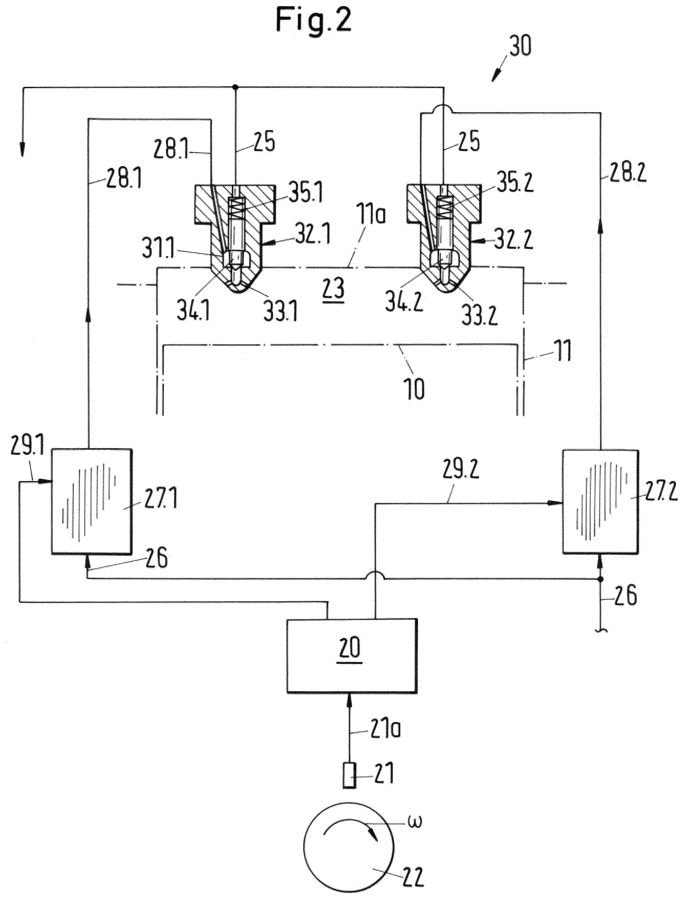

In addition the large reciprocating piston combustion engine of the diesel type 1 includes a system according to the invention for controlling the operation of the engine. This system is explained in detail in connection with the description of Fig. 2 below.

Fig. 2 shows a schematic view of an embodiment of a system according to the present invention for controlling the operation of a large reciprocating piston combustion engine of the diesel type. The system 30 shown includes at least one injection nozzle 32.1, 32.2 for injecting fuel into a combustion chamber 23 of the reciprocating piston combustion engine and a control unit 20 for applying so-called variable injection timing in a partial load range by advancing the value of the injection begin angle depending on engine load or engine speed. The system additionally includes a detector 21 for detecting an increase in engine load or engine speed or in the engine load or engine speed setting, wherein the system is configured to compare the detected increase with a predetermined value and to keep the advance in the injection begin angle caused by variable injection timing unchanged or to shift it to zero if the detected increase exceeds the predetermined value, and wherein the system advances the value of the injection begin angle to the value given by variable injection timing under steady state conditions after stabilization of the engine load or engine speed, in particular after a predefined stabilization time between 30 and 60 minutes or longer.

The detector 21 is advantageously connected to the control unit 20, for example via a line 21a, and can e.g. be implemented and arranged to detect the angle of the crankshaft 22 or of an axis driven by the crankshaft.

In an advantageous embodiment variant the system includes injection devices 27.1, 27.2 and a fuel supply including a tube line or tube lines 26 connected to the injection devices. The control unit 20 is favorably connected to each of the injection devices 27.1, 27.2 via control lines 29.1, 29.2 respectively. Moreover, the injection devices 27.1, 27.2 are usually connected to the injection nozzles 32.1, 32.2 via feed lines 28.1, 28.2 respectively.

In another advantageous embodiment variant of the system the injection nozzle or nozzles 32.1, 32.2 of a known type of construction each have a nozzle needle 34.1, 34.2 which is pressed against a seat area by the action of a closing spring 35.1, 35.2. Beneath the seat area a blind hole is arranged in the nozzle housing, from which injection holes 33.1, 33.2 lead into the combustion chamber 23. A pressure chamber 31.1, 31.2 is each arranged in the nozzle housing above the seat area and is connected to the feed lines 28.1, 28.2 respectively. During the injection phase of the injection nozzle 32.1, 32.2 the pressure of the fuel supplied to the pressure chamber 31.1, 31.2 is so great that the closing force of the spring 35.1, 35.2 is overcome and the nozzle needle 34.1, 34.2 is lifted off the seat area so that the fuel is let into the blind hole and is ejected into the combustion chamber 23 through the injection holes 33.1, 33.2. A line 25 can be connected to the housing of the injection nozzles 32.1, 32.2 for conveying off leakage fuel.

For better understanding the piston 10, the cylinder liner 11 and the cylinder cover 11 are schematically indicated in Fig. 2 by dashed lines.

An embodiment of the method in accordance with the invention for controlling the operation of a large reciprocating piston combustion engine of the diesel type 1 will be described in the following with reference to Figures 1 and 2. The method includes injecting fuel into a combustion chamber 3, 23 of the reciprocating piston combustion engine 1 and applying so-called variable injection timing in a partial load range by advancing the value of the injection begin angle depending on engine load or engine speed. The method additionally includes detecting an increase in engine load or engine speed, comparing the detected increase with a predetermined value and keeping the advance in the injection begin angle caused by variable injection timing either unchanged or shifting it to zero if the detected increase exceeds the predetermined value, and advancing the value of the injection begin angle to the value given by variable injection timing under steady state conditions after stabilization of the engine load or engine speed, for example after a predefined stabilization time between 30 and 60 minutes or longer.

The value of the injection begin angle is advantageously advanced with a predetermined ramp up time to the value given by variable injection timing under steady state conditions after stabilization of the engine load or engine speed.

Upon detection of an increase in engine load or engine speed, the advance in the injection begin angle caused by variable injection timing is advantageously shifted to zero with a predetermined ramp down time if the detected increase exceeds the predetermined value.

In an advantageous embodiment the increase in engine load or engine speed is detected in a time interval, in particular a time interval of 10 minutes maximum or 20 minutes maximum or 30 minutes maximum, and wherein the advance in the injection begin angle caused by variable injection timing is kept unchanged or shifted to zero if the detected increase exceeds the predetermined value in this time interval.

The partial load range in which variable injection timing is applied typically extends from about 60 % to 95 % of full engine load or full engine speed.

The predetermined value with which the detected increase is compared can e.g. be at least 1.5 % or 2 % of the full engine load or engine speed and can optionally depend on the size of the engine.

In a further advantageous embodiment of the method an operator adjustable Fuel Quality Setting is provided for compensating poor fuel ignition properties by advancing or retarding the value of the injection begin angle, for example by a manually input value, and the advance or retard in the injection begin angle caused by Fuel Quality Setting is either kept unchanged or shifted to zero if the detected increase exceeds the predetermined value.

In an advantageous embodiment variant, after stabilization of the engine load or engine speed, in particular after a predefined stabilization time between 30 and 60 minutes or longer, the advance or retard in the injection begin angle caused by Fuel Quality Setting is shifted to the value it had before the detected increase exceeded the predetermined value.

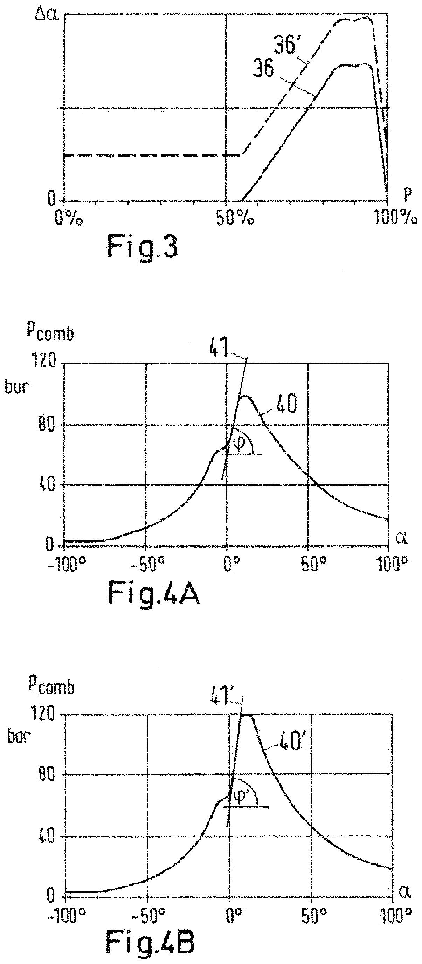

Fig. 3 shows an exemplary diagram of the advance Δα of the injection begin angle as a function of the engine load P under steady state conditions for a large reciprocating piston combustion engine of the diesel type according to the present invention which is controlled by applying variable injection timing. Above 50 % engine load the advance Δα of the injection begin angle starts to increase from zero as indicated by the full line 36 to a maximum value which is reached at about 90 % engine load. Above 90 % engine load the advance Δα of the injection begin angle steeply decreases to zero which is reached above 95 % engine load.

When operator adjustable Fuel Quality Setting is provided the value of the injection begin angle is usually advanced manually by a constant value in order to compensate poor fuel ignition properties. Above 50 % engine load the advance Δα of the injection begin angle starts to increase from the constant value as indicated by the dashed line 36' to a maximum value which is reached at about 90 % engine load. Above 90 % engine load the advance Δα of the injection begin angle steeply decreases to the constant value which is reached above 95 % engine load. When adjustable Fuel Quality Setting is applied, the advance Δα of the injection begin angle is usually just shifted by a constant value compared to the advance Δα of the injection begin angle when only variable injection timing is applied.

Fig. 4A and B show exemplary diagrams of the pressure p_{comb} in the cylinder of a large reciprocating piston combustion engine of the diesel type according to the present invention as a function of the crankshaft angle α. Fig. 4A shows the course 40 of the pressure p_{comb} in the cylinder at partial load without variable injection timing while Fig. 4B shows the course 40' of the pressure p_{comb} in the cylinder at the same partial load with variable injection timing. The maximum of the pressure p_{comb} with variable injection timing is clearly higher than the maximum of the pressure p_{comb} without variable injection timing as can be seen easily when comparing Figures 4A and 4B.

Moreover, a tangent 41, 41' each has been drawn to the course 40, 40' of the pressure p_{comb} in the cylinder shown in Figures 4A and 4B. The gradients dp_{comb}/dα characterized by an elevation ϕ and ϕ' describe how fast the combustion pressure p_{comb} rises. As can be seen easily when comparing Figures 4A and 4B, the combustion pressure p_{comb} rises faster when variable injection timing is applied compared to the rise of the combustion pressure p_{comb} when no variable injection timing is applied.

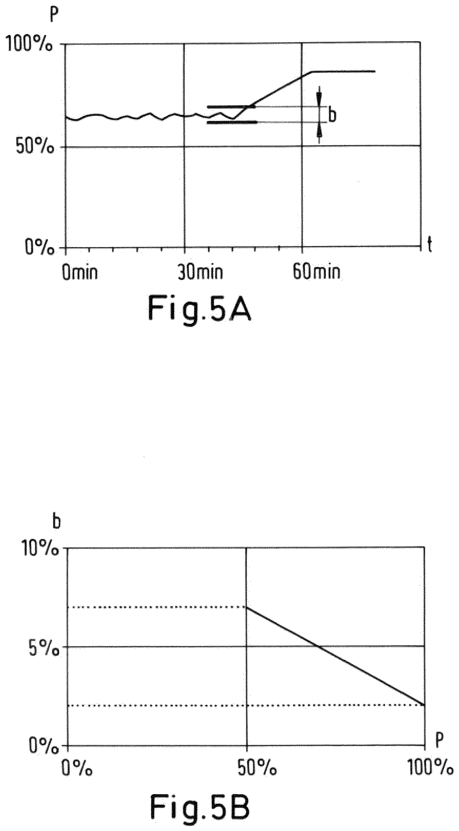

Fig. 5A shows an exemplary diagram of the variation of the engine load P for a large reciprocating piston combustion engine of the diesel type according to the present invention as a function of time t. In the first half of the diagram the variation of the engine load is within a so called dead band, i.e. the variation is smaller than the width b of the dead band and variable injection timing is applied as e.g. indicated in Fig. 3. Than the engine load increases and the variation of the engine load exceeds the width b of the dead band.

In an advantageous embodiment the width b of the dead band corresponds to the predetermined value used in the system and method according to the invention, wherein the method includes detecting an increase in engine load, comparing the detected increase with the predetermined value and keeping the advance in the injection begin angle caused by variable injection timing either unchanged or shifting it to zero if the detected increase exceeds the predetermined value, and advancing the value of the injection begin angle to the value given by variable injection timing after stabilization of the engine load or engine speed, for example after a predefined stabilization time between 30 and 60 minutes or longer.

As shown in Fig. 5A the engine load starts to stabilize after a certain time, e.g. after 15 minutes.

Fig. 5B shows an exemplary diagram of the so-called dead band width b of the engine load for a large reciprocating piston combustion engine of the diesel type as a function of the engine load P. The width b of the dead band starts, as shown in Fig 5B, at about 50 % engine load with a comparatively high value of typically 5 to 8 % of full engine load and decreases to typically 1.5 to 3 % at 100 % engine load.

The invention further includes a retrofit set which contains a control unit for implementing a system according to one or several of the embodiments or embodiment variants described above for controlling the operation of a large reciprocating piston combustion engine of the diesel type. In an advantageous embodiment variant the retrofit set is implemented as a modification of a remote control set for controlling the operation of a large reciprocating piston combustion engine of the diesel type.

The method, system and retrofit set according to the invention can in the same way include further control functions such as variable exhaust valve opening and/or variable exhaust valve closing in order to increase the efficiency of the large reciprocating piston combustion engine of the diesel type in a partial load range. These further control functions can be disabled in the same way as the variable injection timing and the Fuel Quality Setting described above during an increase in engine load or engine speed During an increase in engine load or engine speed a slightly lower efficiency is achieved when using the method, software, system and retrofit set according to the invention for controlling the operation of a large reciprocating piston combustion engine of the diesel type due to temporarily disabling the variable injection timing, Fuel Quality Setting or other control functions intended for increasing efficiency in a partial load range. The temporary disabling of these control functions is, however, short and negligible compared to the whole operation time of the large reciprocating piston combustion engine of the diesel type. The method, system and retrofit set according to the invention and the large reciprocating piston combustion engine of the diesel type according to the invention have, on the other hand, the advantage that they assist in reducing scuffing and that the service life of piston rings and cylinder liners is increased. Seen from an overall economic point, these advantages clearly outweigh the slightly lower efficiency during engine load up.

## Claims

1. Method for controlling the operation of a large reciprocating piston combustion engine (1) of the diesel type, said method including injecting fuel into a combustion chamber (3, 23) of the reciprocating piston combustion engine and applying a variable injection timing under steady state conditions by advancing a value of the injection begin angle by an advance amount (Δα) of the injection begin angle in a partial load range, depending on engine load or engine speed in order to compensate a decrease in efficiency occurring at partial load, wherein an increase in engine load or engine speed is detected, the detected increase in engine load or engine speed is compared with a predetermined value, and if the detected increase in engine load or engine speed is equal to or less than the predetermined value, the advance amount (Δα) of the injection begin angle caused by the variable injection timing is kept unchanged, **characterized in that**, if the detected increase in engine load or engine speed exceeds the predetermined value, the advance amount (Δα) of the injection begin angle caused by the variable injection timing is shifted to zero until after stabilization of the engine load or engine speed, when the value of the injection begin angle is advanced by the advance amount (Δα) in the injection begin angle given by the variable injection timing under steady state conditions, depending on engine load or engine speed, wherein the stabilization of the engine load or engine speed, is defined as being established after a predefined stabilization time between 30 and 60 minutes or longer.

2. Method according to claim 1, wherein the increase in engine load or engine speed is detected in a time interval, in particular a time interval of 10 minutes maximum or 20 minutes maximum or 30 minutes maximum, and wherein the advance amount (Δα) in the injection begin angle caused by variable injection timing shifted to zero if the detected increase exceeds the predetermined value in this time interval.

3. Method according to claim 1 or 2, wherein the partial load range in which the variable injection timing is applied extends from about 60 % to 95 % of full engine load or full engine speed.

4. Method according to any of claims 1 to 3, wherein, upon detection of an increase in engine load or engine speed, the advance amount (Δα) in the injection begin angle caused by variable injection timing is shifted to zero with a predetermined ramp down time if the detected increase exceeds the predetermined value.

5. Method according to any of claims 2 to 4, wherein the value of the injection begin angle is advanced with a predetermined ramp up time to the value given by variable injection timing under steady state conditions after stabilization of the engine load or engine speed.

6. Method according to one of the preceding claims, wherein the predetermined value with which the detected increase is compared is at least 1.5 % or 2 % of the full engine load or engine speed and in particular depends on the size of the engine.

7. Method according to one of the preceding claims, wherein an operator adjustable Fuel Quality Setting is provided for compensating poor fuel ignition properties by advancing or retarding the value of the injection begin angle, and wherein the advance or retard in the injection begin angle caused by Fuel Quality Setting is either kept unchanged or shifted to zero if the detected increase exceeds the predetermined value.

8. Method according to claim 7, wherein after stabilization of the engine load or engine speed, in particular after a predefined stabilization time between 30 and 60 minutes or longer, the advance or retard in the injection begin angle caused by Fuel Quality Setting is shifted to the value it had before the detected increase exceeded the predetermined value.

9. System (30) configured to control the operation of a large reciprocating piston combustion engine (1) of the diesel type said system including an injection nozzle (12, 32.1, 32.2) for injecting fuel into a combustion chamber (2, 23) of the reciprocating piston combustion engine and a control unit (20) for applying a variable injection timing under steady state conditions by advancing a value of the injection begin angle by an advance amount (Δα) of the injection begin angle in a partial load range, depending on engine load or engine speed in order to compensate a decrease in efficiency occurring at partial load, wherein an increase in engine load or engine speed is detected, the detected increase in engine load or engine speed is compared with a predetermined value, and if the detected increase in engine load or engine speed is equal to or less than the predetermined value, the advance amount (Δα) of the injection begin angle caused by the variable injection timing is kept unchanged, **characterized in that**, if the detected increase in engine load or engine speed exceeds the predetermined value, the advance amount (Δα) of the injection begin angle caused by the variable injection timing is shifted to zero until after stabilization of the engine load or engine speed, when the value of the injection begin angle is advanced to by the advance amount (Δα) in the injection begin angle given by the variable injection timing under steady state conditions, depending on engine load or engine speed, wherein the stabilization of the engine load or engine speed is defined as being established in particular after a predefined stabilization time between 30 and 60 minutes or longer.

10. Retrofit set containing a control unit for a system according to claim 9 for controlling the operation of a large reciprocating piston combustion engine of the diesel type.

11. Large reciprocating piston combustion engine (1) of the diesel type including at least one combustion chamber (3, 23) and a system (30) according to claim 9 or a retrofit set according to claims 10 for controlling the operation of the reciprocating piston combustion engine.

## Patentansprüche

1. Verfahren zum Steuern des Betriebs eines grossen Hubkolbenverbrennungsmotors (1) vom Dieseltyp, wobei das Verfahren das Einspritzen von Kraftstoff in eine Brennkammer (3, 23) des Hubkolbenverbrennungsmotors und das Anwenden eines variablen Einspritzzeitpunkts unter stationären Bedingungen durch Vorverlegen eines Werts des Einspritzbeginnwinkels um einen Vorverlegungsbetrag (Δα) des Einspritzbeginnwinkels in einem Teillastbereich in Abhängigkeit von der Motorlast oder der Motordrehzahl, um eine Abnahme des bei Teillast auftretenden Wirkungsgrads zu kompensieren, umfasst, wobei eine Zunahme der Motorlast oder Motordrehzahl erfasst wird, die erfasste Zunahme der Motorlast oder Motordrehzahl mit einem vorbestimmten Wert verglichen wird, und wenn die erfasste Zunahme der Motorlast oder Motordrehzahl gleich oder kleiner als der vorbestimmte Wert ist, der Vorverlegungsbetrag (Δα) des Einspritzbeginnwinkels, der durch den variablen Einspritzzeitpunkt verursacht wird, unverändert gehalten wird, **dadurch gekennzeichnet, dass**, wenn die erfasste Zunahme der Motorlast oder Motordrehzahl den vorbestimmten Wert überschreitet, der Vorverlegungsbetrag (Δα) des Einspritzbeginnwinkels, der durch den variablen Einspritzzeitpunkt verursacht wird, auf null verschoben wird, bis nach der Stabilisierung der Motorlast oder Motordrehzahl, wenn der Wert des Einspritzbeginnwinkels um den Vorverlegungsbetrag (Δα) in dem Einspritzbeginnwinkel, der durch den variablen Einspritzzeitpunkt gegeben ist, unter stationären Bedingungen in Abhängigkeit von der Motorlast oder Motordrehzahl vorverlegt wird, wobei die Stabilisierung der Motorlast oder Motordrehzahl so definiert ist, dass sie nach einer vordefinierten Stabilisierungszeit zwischen 30 und 60 Minuten oder länger erreicht wird.

2. Verfahren nach Anspruch 1, wobei die Zunahme der Motorlast oder Motordrehzahl in einem Zeitintervall erfasst wird, insbesondere einem Zeitintervall von höchstens 10 Minuten oder höchstens 20 Minuten oder höchstens 30 Minuten, und wobei der Vorverlegungsbetrag (Δα) in dem Einspritzbeginnwinkel, der durch den variablen Einspritzzeitpunkt verursacht wird, auf null verschoben wird, wenn die erfasste Zunahme den vorbestimmten Wert in diesem Zeitintervall überschreitet.

3. Verfahren nach Anspruch 1 oder 2, wobei sich der Teillastbereich, in dem der variable Einspritzzeitpunkt angewendet wird, von etwa 60 % bis 95 % der vollen Motorlast oder vollen Motordrehzahl erstreckt.

4. Verfahren nach einem der Ansprüche 1 bis 3, wobei bei Erfassung einer Zunahme der Motorlast oder Motordrehzahl der Vorverlegungsbetrag (Δα) in dem Einspritzbeginnwinkel, der durch den variablen Einspritzzeitpunkt verursacht wird, mit einer vorbestimmten Herunterfahrzeit auf null verschoben wird, wenn die erfasste Zunahme den vorbestimmten Wert überschreitet.

5. Verfahren nach einem der Ansprüche 2 bis 4, wobei der Wert des Einspritzbeginnwinkels mit einer vorbestimmten Hochfahrzeit auf den Wert vorverlegt wird, der durch den variablen Einspritzzeitpunkt unter stationären Bedingungen nach Stabilisierung der Motorlast oder Motordrehzahl gegeben ist.

6. Verfahren nach einem der vorhergehenden Ansprüche, wobei der vorbestimmte Wert, mit dem die erfasste Zunahme verglichen wird, mindestens 1,5 % oder 2 % der vollen Motorlast oder Motordrehzahl beträgt und insbesondere von der Grösse des Motors abhängt.

7. Verfahren nach einem der vorhergehenden Ansprüche, wobei eine vom Anwender einstellbare Kraftstoffqualitätseinstellung zum Kompensieren schlechter Kraftstoffzündeigenschaften durch Vorverlegen oder Verzögern des Werts des Einspritzbeginnwinkels bereitgestellt wird, und wobei die Vorverlegung oder die Verzögerung in dem Einspritzbeginnwinkel, die durch die Kraftstoffqualitätseinstellung verursacht wird, entweder unverändert gehalten oder auf null verschoben wird, wenn die erfasste Zunahme den vorbestimmten Wert überschreitet.

8. Verfahren nach Anspruch 7, wobei nach Stabilisierung der Motorlast oder Motordrehzahl, insbesondere nach einer vordefinierten Stabilisierungszeit zwischen 30 und 60 Minuten oder länger, die Vorverlegung oder Verzögerung in dem Einspritzbeginnwinkel, die durch die Kraftstoffqualitätseinstellung verursacht wird, auf den Wert verschoben wird, den sie hatte, bevor die erfasste Zunahme den vorbestimmten Wert überschritten hat.

9. System (30), das konfiguriert ist, um den Betrieb eines grossen Hubkolbenverbrennungsmotors (1) vom Dieseltyp zu steuern, wobei das System eine Einspritzdüse (12, 32.1, 32.2) zum Einspritzen von Kraftstoff in eine Brennkammer (2, 23) des Hubkolbenverbrennungsmotors und eine Steuereinheit (20) zum Anwenden eines variablen Einspritzzeitpunkts unter stationären Bedingungen durch Vorverlegen eines Werts des Einspritzbeginnwinkels um einen Vorverlegungsbetrag (Δα) des Einspritzbeginnwinkels in einem Teillastbereich in Abhängigkeit von der Motorlast oder Motordrehzahl, um eine Abnahme des bei Teillast auftretenden Wirkungsgrads zu kompensieren, umfasst, wobei eine Zunahme der Motorlast oder Motordrehzahl erfasst wird, die erfasste Zunahme der Motorlast oder Motordrehzahl mit einem vorbestimmten Wert verglichen wird, und wenn die erfasste Zunahme der Motorlast oder Motordrehzahl gleich oder kleiner als der vorbestimmte Wert ist, der Vorverlegungsbetrag (Δα) des Einspritzbeginnwinkels, der durch den variablen Einspritzzeitpunkt verursacht wird, unverändert gehalten wird, **dadurch gekennzeichnet, dass**, wenn die erfasste Zunahme der Motorlast oder Motordrehzahl den vorbestimmten Wert überschreitet, der Vorverlegungsbetrag (Δα) des Einspritzbeginnwinkels, der durch den variablen Einspritzzeitpunkt verursacht wird, auf null verschoben wird, bis nach der Stabilisierung der Motorlast oder Motordrehzahl, wenn der Wert des Einspritzbeginnwinkels um den Vorverlegungsbetrag (Δα) in dem Einspritzbeginnwinkel, der durch den variablen Einspritzzeitpunkt gegeben ist, unter stationären Bedingungen in Abhängigkeit von der Motorlast oder Motordrehzahl vorverlegt wird, wobei die Stabilisierung der Motorlast oder Motordrehzahl so definiert ist, dass sie nach einer vordefinierten Stabilisierungszeit zwischen 30 und 60 Minuten oder länger erreicht wird.

10. Nachrüstsatz, der eine Steuereinheit für ein System nach Anspruch 9 zum Steuern des Betriebs eines grossen Hubkolbenverbrennungsmotors vom Dieseltyp enthält.

11. Grosser Hubkolbenverbrennungsmotor (1) vom Dieseltyp, der mindestens eine Brennkammer (3, 23) und ein System (30) nach Anspruch 9 oder einen Nachrüstsatz nach Anspruch 10 zum Steuern des Betriebs des Hubkolbenverbrennungsmotors enthält.

## Revendications

1. Procédé de commande du fonctionnement d'un grand moteur à combustion à piston alternatif (1) du type diesel, ledit procédé comprenant l'injection de carburant dans une chambre de combustion (3, 23) du moteur à combustion à piston alternatif et l'application d'un calage d'injection variable dans des conditions d'état stable en avançant une valeur de l'angle de début d'injection d'une quantité d'avance (Δα) de l'angle de début d'injection dans une plage de charge partielle, en fonction de la charge du moteur ou de la vitesse du moteur afin de compenser une diminution du rendement se produisant à une charge partielle, dans lequel une augmentation de la charge du moteur ou de la vitesse du moteur est détectée, l'augmentation détectée de la charge du moteur ou de la vitesse du moteur est comparée à une valeur prédéterminée, et si l'augmentation détectée de la charge du moteur ou de la vitesse du moteur est égale ou inférieure à la valeur prédéterminée, la quantité d'avance (Δα) de l'angle de début d'injection causée par le calage d'injection variable est maintenue inchangée, **caractérisé en ce que**, si l'augmentation détectée de la charge du moteur ou de la vitesse du moteur dépasse la valeur prédéterminée, la quantité d'avance (Δα) de l'angle de début d'injection causée par le calage d'injection variable est décalée à zéro jusqu'après la stabilisation de la charge du moteur ou de la vitesse du moteur, lorsque la valeur de l'angle de début d'injection est avancée de la quantité d'avance (Δα) de l'angle de début d'injection donnée par le calage d'injection variable dans des conditions d'état stable, en fonction de la charge du moteur ou de la vitesse du moteur, dans lequel la stabilisation de la charge du moteur ou de la vitesse du moteur est définie comme étant établie après un temps de stabilisation prédéfini entre 30 et 60 minutes ou plus.

2. Procédé selon la revendication 1, dans lequel l'augmentation de la charge du moteur ou de la vitesse du moteur est détectée dans un intervalle de temps, en particulier un intervalle de temps de 10 minutes au maximum ou de 20 minutes au maximum ou de 30 minutes au maximum, et dans lequel la quantité d'avance (Δα) dans l'angle de début d'injection causée par le calage d'injection variable décalé à zéro si l'augmentation détectée dépasse la valeur prédéterminée dans cet intervalle de temps.

3. Procédé selon la revendication 1 ou 2, dans lequel la plage de charge partielle dans laquelle le calage d'injection variable est appliqué s'étend d'environ 60 % à 95 % de la charge du moteur complète ou de la vitesse du moteur complet.

4. Procédé selon l'une quelconque des revendications 1 à 3, dans lequel, lors de la détection d'une augmentation de la charge du moteur ou de la vitesse du moteur, la quantité d'avance (Δα) dans l'angle de début d'injection causée par le calage d'injection variable est décalée à zéro avec un temps d'abaissement prédéterminé si l'augmentation détectée dépasse la valeur prédéterminée.

5. Procédé selon l'une quelconque des revendications 2 à 4, dans lequel la valeur de l'angle de début d'injection est avancée avec un temps d'augmentation prédéterminé à la valeur donnée par le calage d'injection variable dans des conditions d'état stable après stabilisation de la charge du moteur ou de la vitesse du moteur.

6. Procédé selon l'une des revendications précédentes, dans lequel la valeur prédéterminée à laquelle l'augmentation détectée est comparée est d'au moins 1,5 % ou 2 % de la charge du moteur complète ou de la vitesse du moteur et dépend en particulier de la taille du moteur.

7. Procédé selon l'une des revendications précédentes, dans lequel un réglage de qualité de carburant réglable par l'opérateur est prévu pour compenser de mauvaises propriétés d'allumage de carburant en avançant ou en retardant la valeur de l'angle de début d'injection, et dans lequel l'avance ou le retard dans l'angle de début d'injection causé par le réglage de qualité de carburant est soit maintenu inchangé soit décalé à zéro si l'augmentation détectée dépasse la valeur prédéterminée.

8. Procédé selon la revendication 7, dans lequel après stabilisation de la charge du moteur ou de la vitesse du moteur, en particulier après un temps de stabilisation prédéfini entre 30 et 60 minutes ou plus, l'avance ou le retard dans l'angle de début d'injection causé par le réglage de qualité de carburant est décalé à la valeur qu'il avait avant que l'augmentation détectée ne dépasse la valeur prédéterminée.

9. Système (30) configuré pour commander le fonctionnement d'un grand moteur à combustion à piston alternatif (1) du type diesel, ledit système comprenant une buse d'injection (12, 32.1, 32.2) pour injecter du carburant dans une chambre de combustion (2, 23) du moteur à combustion à piston alternatif et une unité de commande (20) pour appliquer un calage d'injection variable dans des conditions d'état stable en avançant une valeur de l'angle de début d'injection d'une quantité d'avance (Δα) de l'angle de début d'injection dans une plage de charge partielle, en fonction de la charge du moteur ou de la vitesse du moteur afin de compenser une diminution du rendement se produisant à une charge partielle, dans lequel une augmentation de la charge du moteur ou de la vitesse du moteur est détectée, l'augmentation détectée de la charge du moteur ou de la vitesse du moteur est comparée à une valeur prédéterminée, et si l'augmentation détectée de la charge du moteur ou de la vitesse du moteur est égale ou inférieure à la valeur prédéterminée, la quantité d'avance (Δα) de l'angle de début d'injection causée par le calage d'injection variable est maintenue inchangée, **caractérisé en ce que**, si l'augmentation détectée de la charge du moteur ou de la vitesse du moteur dépasse la valeur prédéterminée, la quantité d'avance (Δα) de l'angle de début d'injection causé par le calage d'injection variable est décalée à zéro jusqu'à après la stabilisation de la charge du moteur ou de la vitesse du moteur, lorsque la valeur de l'angle de début d'injection est avancée de la quantité d'avance (Δα) dans l'angle de début d'injection donné par le calage d'injection variable dans des conditions d'état stable, en fonction de la charge du moteur ou de la vitesse du moteur, dans lequel la stabilisation de la charge du moteur ou de la vitesse du moteur est définie comme étant établie en particulier après un temps de stabilisation prédéfini entre 30 et 60 minutes ou plus.

10. Ensemble d'adaptation contenant une unité de commande pour un système selon la revendication 9 pour commander le fonctionnement d'un grand moteur à combustion à piston alternatif du type diesel.

11. Grand moteur à combustion à piston alternatif (1) du type diesel comprenant au moins une chambre de combustion (3, 23) et un système (30) selon la revendication 9 ou un ensemble d'adaptation selon la revendication 10 pour commander le fonctionnement du moteur à combustion à piston alternatif.
